(19) Europäisches Patentamt
European Patent Office
Office européen des brevets

(11) **EP 2 416 582 A1**

(12) **EUROPEAN PATENT APPLICATION**
published in accordance with Art. 153(4) EPC

(43) Date of publication:
**08.02.2012 Bulletin 2012/06**

(51) Int Cl.:
***H04N 13/04*** *(2006.01)*

(21) Application number: **10758630.7**

(22) Date of filing: **29.03.2010**

(86) International application number:
**PCT/JP2010/055544**

(87) International publication number:
**WO 2010/113859 (07.10.2010 Gazette 2010/40)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.03.2009 JP 2009087396**

(71) Applicant: **Sharp Kabushiki Kaisha**
**Osaka-shi, Osaka 545-8522 (JP)**

(72) Inventors:
• **Suenaga, Takeaki**
**Osaka 545-8522 (JP)**
• **Yamamoto, Kenichiro**
**Osaka 545-8522 (JP)**
• **Shioi, Masahiro**
**Osaka 545-8522 (JP)**
• **Ohtsu, Makoto**
**Osaka 545-8522 (JP)**
• **Seto, Mikio**
**Osaka 545-8522 (JP)**

(74) Representative: **Müller - Hoffmann & Partner**
**Patentanwälte**
**Innere Wiener Strasse 17**
**81667 München (DE)**

(54) **VIDEO PROCESSING DEVICE, VIDEO PROCESSING METHOD, AND COMPUTER PROGRAM**

(57)    Provided is a video processing device capable of improving the perceived depth of video image through image process only without using a special video display device and special glasses. The video processing device (1) enhances the perceived depth of video image obtained by an image obtaining unit (11), and is provided with: a depth information obtaining unit (12) that obtains depth information indicating the distance in the depth direction of each of a plurality of image portions included in the video image; an image dividing unit (13) that divides the video image, based on the depth information obtained at the depth information obtaining unit (12) and based on the video image, into a plurality of image portions having different distances in the depth direction; and an image combining unit (16) that combines the image portions divided at the image dividing unit (13) and a depth-enhancing image used for enhancing the depth of the video image such that the depth-enhancing image is superposed onto one image portion and further that the other image portion having a shorter distance in the depth direction than the one image portion is superposed onto the depth-enhancing image.

FIG. 1

**Description**

TECHNICAL FIELD

The present invention relates to: a video processing device and a video processing method for performing process of enhancing the perceived depth of an inputted video image; and a computer program for controlling a computer to execute process to be executed as the video processing device.

BACKGROUND ART

Various kinds of techniques have been proposed for enhancing the stereoscopic vision or the perceived depth of a two-dimensional video image displayed on a video display device such as a television set and a portable phone. For example, as a method of enhancing the stereoscopic vision or the perceived depth, a stereoscopic vision technique is proposed that employs binocular parallax. In such a stereoscopic vision technique, a left-eye parallax image and a right-eye parallax image are transmitted respectively to the left eye and the right eye of a viewing person so as to cause illusion in the viewing person such that stereoscopic vision or perceived depth is generated in a two-dimensional plane. A method of transmitting a left-eye parallax image and a right-eye parallax image respectively to the left eye and the right eye employs: a video display device that displays a left-eye parallax image and a right-eye parallax image in an alternately switched manner; and glasses that block left and right optical paths in a switched manner in synchronization with the frequency of switching of the parallax images (e.g., Patent Document 1).
Another method is an anaglyph method employing: a video display device that performs color conversion of a left-eye parallax image and a right-eye parallax image respectively into a red image and a blue image and then displays the color-converted images in superposition; and a pair of red and blue glasses, so that the red image and the blue image are transmitted respectively to the left eye and the right eye.
Yet another method employs: a video display device that displays a left-eye parallax image and a right-eye parallax image in mutually different polarized light; and polarizer glasses, so that a left-eye parallax image and a right-eye parallax image are transmitted respectively to the left eye and the right eye (e.g., Patent Document 2).
On the other hand, in the field of painting, the stereoscopic vision or the perceived depth of a painting is enhanced by using pictorial-art techniques such as a perspective method, a shadow method, and a combination between advancing color and receding color. An artwork produced by using such the pictorial-art technique is called a trick art or a trompe l'oeil. In such a trick art, superposition relations between a background and individual objects in a planar artwork are depicted by using the above-mentioned pictorial-art techniques so that illusion is generated as if a part of the objects depicted in two dimensions pop out into the three-dimensional space of real world, so that stereoscopic vision or perceived depth is imparted to a planar artwork.

BACKGROUND ART DOCUMENT

PATENT DOCUMENT

[Patent Document 1]
Japanese Patent Application Laid-Open No. S60-7291
[Patent Document 2]
Japanese Patent Application Laid-Open No. H1-171390

DISCLOSURE OF THE INVENTION

PROBLEMS TO BE RESOLVED BY THE INVENTION

Nevertheless, in the systems according to Patent Documents 1 and 2, a dedicated video display device and special glasses need be prepared. Further, the viewing person need wear special glasses, and hence a problem arises that significant restriction is placed on the method of viewing.
The present invention has been made with the aim of solving the above problems, and it is an object of the present invention to provide: a video processing device and a video processing method capable of improving the perceived depth of a video image by image process alone without the use of a dedicated video display device and special glasses; and a computer program causing a computer to serve as the video processing device.

MEANS OF SOLVING THE PROBLEMS

The video processing device according to the present invention is a video processing device performing process of enhancing perceived depth of an inputted video image, and comprising: depth information obtaining means for obtaining depth information indicating distance in the depth direction of each of a plurality of image portions included in the video image; image dividing means for dividing the video image, on the basis of the depth information obtained by the depth information obtaining means and on the basis of the video image, into a plurality of image portions having mutually different distances in the depth direction; and image combining means for combining the image portions divided by the image dividing means and a depth-enhancing image used for enhancing the depth of the video image such that the depth-enhancing image is superposed onto one image portion and further that the other image portion having a shorter distance in the depth direction than the one image portion is superposed onto the depth-enhancing image.

The video processing device according to the present invention comprises generating means for generating, on the basis of luminance or color of the inputted video image, a depth-enhancing image having luminance or color different from that of the video image, wherein the image combining means combines the depth-enhancing image generated by the generating means.

The video processing device according to the present invention is **characterized in that** the generating means generates, on the basis of the luminance or the color of one image portion and/or the other image portion obtained by division in the image dividing means, a depth-enhancing image having luminance or color different from that of the image portion.

The video processing device according to the present invention comprises: a configuration such that a plurality of video images are inputted in the order of time series; and moving direction information obtaining means for obtaining moving direction information indicating a moving direction of an image portion between the video images inputted in the order of time series, wherein the generating means generates a depth-enhancing image having a shape in accordance with the moving direction information obtained by the moving direction information obtaining means.

The video processing device according to the present invention comprises: a configuration such that a plurality of video images are inputted in the order of time series; moving direction information obtaining means for obtaining moving direction information indicating a moving direction of an image portion between the video images inputted in the order of time series; and generating means for generating a depth-enhancing image having a shape in accordance with the moving direction information obtained by the moving direction information obtaining means, wherein the image combining means combines the depth-enhancing image generated by the generating means.

The video processing device according to the present invention comprises storage means storing a given three-dimensional image, wherein the generating means comprises rotation processing means for rotating the three-dimensional image stored in the storage means such that the three-dimensional image and the moving direction indicated by the moving direction information obtained by the moving direction information obtaining means should be in a given positional relation with each other, and thereby generates a depth-enhancing image having a two-dimensional shape obtained by projecting, onto a given two-dimensional plane, the three-dimensional image rotated by the rotation processing means.

The video processing method according to the present invention is a video processing method of performing process of enhancing perceived depth of an inputted video image, and comprising the steps of: obtaining depth information indicating the distance in the depth direction of each of a plurality of image portions included in the video image; on the basis of the obtained depth information and the video image, dividing the video image into a plurality of image portions having mutually different distances in the depth direction; and combining the image portions obtained by division and a depth-enhancing image used for enhancing the depth of the video image such that the depth-enhancing image is superposed onto one image portion and further that the other image portion having a shorter distance in the depth direction than the one image portion is superposed onto the depth-enhancing image.

The computer program according to the present invention is a computer program causing a computer to execute process of enhancing perceived depth of a video image, and causing the computer to execute the steps of; on the basis of depth information indicating distance in the depth direction of each of a plurality of image portions included in the video image and on the basis of the video image, dividing the video image into a plurality of image portions having mutually different distances in the depth direction; and combining the image portions obtained by division and a depth-enhancing image used for enhancing the depth of the video image such that the depth-enhancing image is superposed onto one image portion and further that the other image portion having a shorter distance in the depth direction than the one image portion is superposed onto the depth-enhancing image.

In the present invention, depth information is obtained that indicates the distance in the depth direction of each of a plurality of image portions included in a video image. Then, on the basis of the obtained depth information, the video image is divided into a plurality of image portions having mutually different distances in the depth direction. Then, the image portions and the depth-enhancing image are combined such that the depth-enhancing image used for enhancing the depth of the video image is superposed onto at least one image portion and further that the other image portion having a shorter distance in the depth direction than the one image portion is superposed onto the depth-enhancing image. In the combined video image, the one image portion, the depth-enhancing image, and the other image portion are combined in superposition in this order. Thus, the depth of the one image portion and the other image portion is enhanced by the depth-enhancing image.

Specifically, in a case that the depth-enhancing image is combined in superposition onto a part of the one image portion, the viewing person recognizes that the depth-enhancing image is located on the near side relative to the one image portion. Further, in a case that the other image portion is combined in superposition onto a part of the depth-enhancing image, the viewing person recognizes that the other image portion is located on the near side relative to the depth-enhancing image. This allows the viewing person to feel perceived depth that the one image portion and the other image portion are separated in the depth direction.

Here, the number of depth-enhancing images is not limited to one. That is, the present invention also includes technical spirit that the video image is divided into three or more image portions and then the image portions and depth-enhancing images are combined such that the depth-enhancing images are inserted between the individual image portions.

In the present invention, on the basis of the luminance or the color of the inputted video image, the generating means generates a depth-enhancing image having luminance or color different from that of the video image. Thus, the depth-enhancing image and the image portion have different luminance or color from each other. This permits effective enhancement of the depth of the one image portion and the other image portion.

In the present invention, on the basis of the luminance or the color of one image portion and/or the other image portion, the generating means generates a depth-enhancing image having luminance or color different from that of the image portion. Thus, the depth-enhancing image and the image portion have different luminance or color from each other. This permits effective enhancement of the depth of the one image portion and the other image portion.

In the present invention, the moving direction information obtaining means obtains moving direction information indicating the moving direction of an image portion between individual video images inputted in the order of time series. Then, the generating means generates a depth-enhancing image having a shape in accordance with the obtained moving direction information. That is, the generating means generates a depth-enhancing image having a shape capable of enhancing the movement of the image portion.

In the present invention, the storage means stores a three-dimensional image serving as a source of the depth-enhancing image. Then, the rotation processing means rotates the three-dimensional image such that the three-dimensional image stored in the storage means and the moving direction indicated by the moving direction information concerning obtained by the moving direction information obtaining means should be in a given positional relation with each other. That is, the three-dimensional image is rotated such as to be oriented in the moving direction of the image portion. Then, the generating means generates a depth-enhancing image having a two-dimensional shape obtained by projecting the rotated three-dimensional image onto a given two-dimensional plane. Thus, the depth-enhancing image to be combined has a shape such as to be oriented in the moving direction of the image portion. Accordingly, movement of the image portion is enhanced.

Here, the three-dimensional image indicates an image in a three-dimensional space. Such three-dimensional images include a stereoscopic image in a three-dimensional space as well as a planar image.

EFFECT OF THE INVENTION

According to the present invention, the perceived depth of a video image is improved by image process alone without the use of a dedicated video display device and special glasses.

BRIEF DESCRIPTION OF THE DRAWINGS

FIG. 1 is a block diagram illustrating an exemplary configuration of a video processing device according to an embodiment of the present invention;
FIG. 2 is an explanation diagram illustrating an example of a video image obtained by an image obtaining unit;
FIG. 3 is an explanation diagram conceptually illustrating depth information;
FIG. 4A is an explanation diagram conceptually illustrating a foreground image portion;
FIG. 4B is an explanation diagram conceptually illustrating a background image portion;
FIG. 5A is an explanation diagram conceptually illustrating pop-out information;
FIG. 5B is an explanation diagram conceptually illustrating pop-out information;
FIG. 6 is an explanation diagram conceptually illustrating an original three-dimensional frame object;
FIG. 7A is an explanation diagram conceptually illustrating a shape determining method for a frame object;
FIG. 7B is an explanation diagram conceptually illustrating a shape determining method for a frame object;

FIG. 7C is an explanation diagram conceptually illustrating a shape determining method for a frame object;

FIG. 8A is an explanation diagram conceptually illustrating a determining method for the luminance and the color of a frame object;

FIG. 8B is an explanation diagram conceptually illustrating a determining method for the luminance and the color of a frame object;

FIG. 8C is an explanation diagram conceptually illustrating a determining method for the luminance and the color of a frame object;

FIG. 8D is an explanation diagram conceptually illustrating a determining method for the luminance and the color of a frame object;

FIG. 8E is an explanation diagram conceptually illustrating a determining method for the luminance and the color of a frame object;

FIG. 8F is an explanation diagram conceptually illustrating a determining method for the luminance and the color of a frame object;

FIG. 9A is an explanation diagram conceptually illustrating the contents of process in an image combining unit;

FIG. 9B is an explanation diagram conceptually illustrating the contents of process in an image combining unit;

FIG. 10 is a flowchart illustrating the flow of a video processing method to be executed in a video processing device;

FIG. 11 is a flowchart illustrating the flow of operation of a frame object generating unit;

FIG. 12 is a block diagram illustrating an exemplary configuration of a video processing device according to modification 1;

FIG. 13 is a block diagram illustrating an exemplary configuration of a video processing device according to modification 2;

FIG. 14 is a schematic diagram illustrating a curtain object serving as an example of a depth-enhancing image;

FIG. 15 is an explanation diagram conceptually illustrating a shape determining method for a frame object according to modification 4; and

FIG. 16 is a block diagram illustrating a video processing device according to modification 5.

MODE FOR CARRYING OUT THE INVENTION

The following will describe in detail the present invention with reference to the drawings illustrating an embodiment thereof.

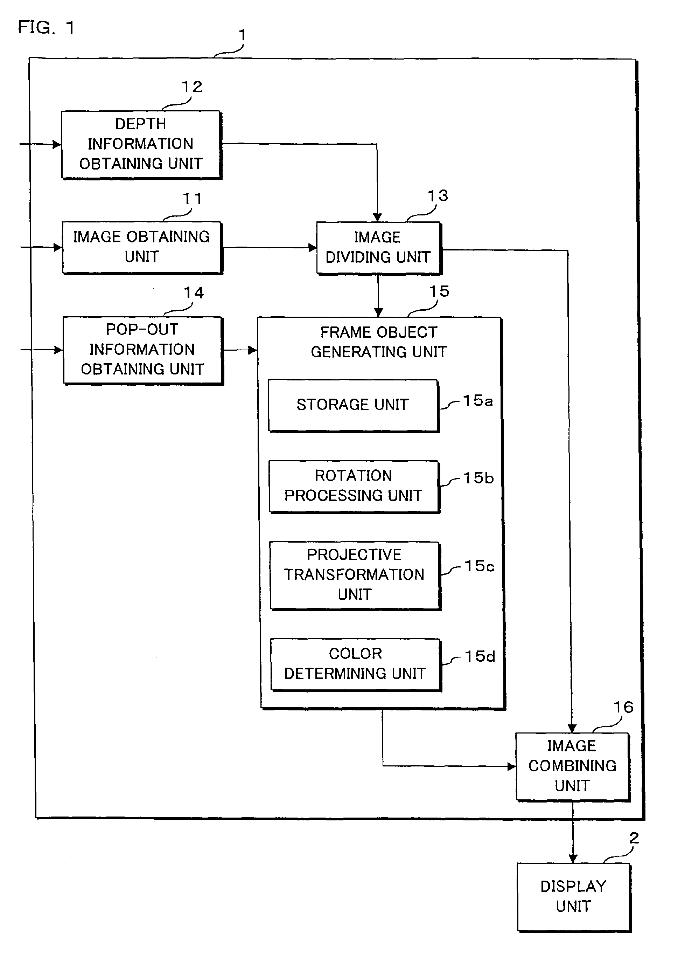

FIG. 1 is a block diagram illustrating an exemplary configuration of a video processing device 1 according to an embodiment of the present invention. The video processing device 1 according to the present embodiment has an image obtaining unit 11, a depth information obtaining unit 12, an image dividing unit 13, a pop-out information obtaining unit 14, a frame object generating unit 15, and an image combining unit 16.

<Image obtaining unit>

The image obtaining unit 11 obtains a video image serving as a target of video image process of improving the stereoscopic vision or the perceived depth, and then outputs the obtained video image to the image dividing unit 13. The video image obtained by the image obtaining unit 11 may be either a still image or a video image. A still image consists of a video image of one frame. A video consists of video images of plural frames arranged in the order of time series. Further, the video image may be compressed one according to a given encoding method such as JPEG (Joint Photographic Experts Group) and MPEG-2 (Moving Picture Expert Group phase2), or alternatively may be uncompressed one. In a configuration that an encoded video image is obtained, the image obtaining unit 11 decodes the obtained video image into a video image of RGB form, YUV form, or the like in accordance with the given encoding method, and then outputs the video image obtained by decoding to the image dividing unit 13.

In the following, for simplicity of description, the present embodiment is explained for processing to be performed on a video image of one frame that constitutes a still image or a video. However, in the case of a video, similar process is performed onto each of the video image frames in the order of time series.

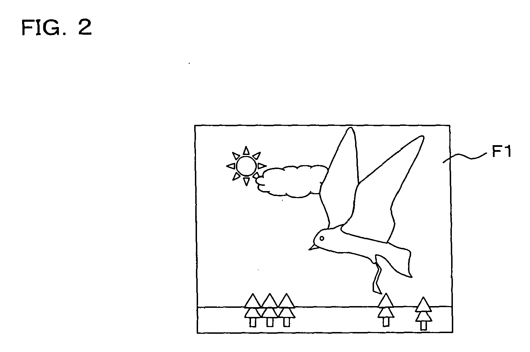

FIG. 2 is an explanation diagram illustrating an example of a video image obtained by the image obtaining unit 11. The video image illustrated in FIG. 2 is data expressing the luminance and the color of each of a plurality of pixels arranged in two dimensions, and is constructed from a plurality of objects having mutually different distances in the depth direction, that is, for example, from a video image corresponding to photographic objects such as a bird, a tree, the sun, the sky, and a cloud. The distance in the depth direction indicates the distance between the photographic object corresponding to an object and a given position, for example, the position of an image obtaining device used in image pick-up of the video image. In the following description, this distance is referred to as depth, when necessary.

<Depth information obtaining unit>

The depth information obtaining unit 12 obtains depth information indicating the depth of each of a plurality of objects included in the video image obtained through the image obtaining unit 11, and then outputs the obtained depth information to the image dividing unit 13. In the present embodiment, it is assumed that the distance in the depth direction between the image obtaining device and each photographic object is measured at the time of image pick-up and then depth information comprising the information concerning the distance obtained by measuring is inputted to the video processing device 1 separately from the video image.

Here, the distance between the image obtaining device and each photographic object may be measured, for example, by applying a stereo method. Specifically, two image pick-up units arranged separately from each other obtain images of a common photographic object. Then, the parallax of the photographic object is calculated from the two video images obtained by the image pick-up units, so that the distance between the image obtaining device and the photographic object is obtained by the principle of triangulation.

Alternatively, an image obtaining device may be provided with: a ranging-use infrared-ray projection unit projecting an infrared ray onto a photographic object; and an infrared-ray detection unit measuring the intensity of the infrared ray reflected by the photographic object. Then, on the basis of the intensity of the infrared ray reflected from each photographic object, the distance between the image obtaining device and the photographic object may be obtained.

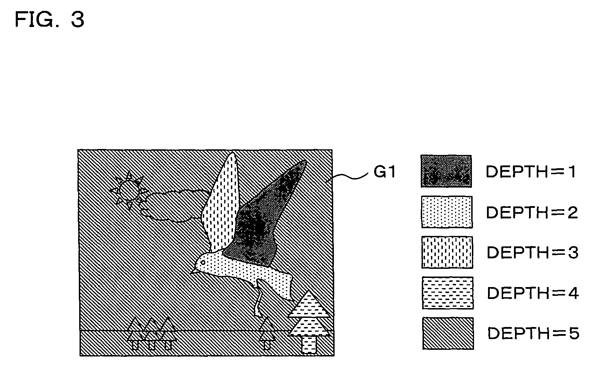

FIG. 3 is an explanation diagram conceptually illustrating depth information. As illustrated in FIG. 3, an image having information concerning the depth corresponding to each of a plurality of objects included in the video image is referred to as a depth image. The depth is indicated, for example, by ascending numbers 1, 2, ..., 5 starting at the shortest distance. Specifically, the depth image is constructed from a plurality of pixels similarly to the inputted video image. Then, any one of numerical values from 1 to 5 indicating the depth corresponds to each pixel constituting the inputted video image is assigned as a pixel value of each pixel of the depth image. Here, for simplicity of description, the depth information is expressed in five steps. However, the depth information may be expressed in less than five steps or in more than five steps, or alternatively may be expressed in a stepless manner.

<Image dividing unit>

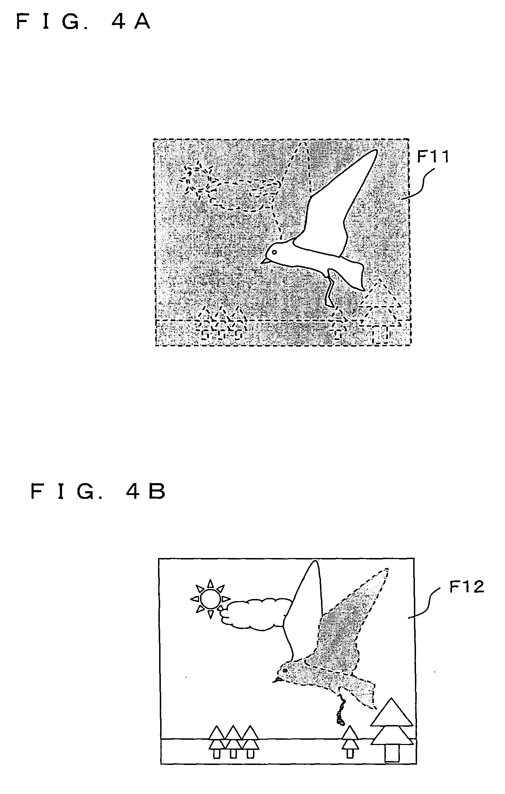

On the basis of the depth information obtained by the depth information obtaining unit 12, the image dividing unit 13 divides the video image obtained by the image obtaining unit 11 into a foreground image portion F11 and a background image portion F12 (see FIG. 4A and FIG. 4B). Then, the image dividing unit 13 outputs the foreground image portion F11 and the background image portion F12 obtained by dividing, to the frame object generating unit 15 and the image combining unit 16. Specifically, the image dividing unit 13 compares with a given threshold the depth corresponding to each pixel of the obtained video image. Then, when the depth is smaller than the threshold, the pixel is adopted as a pixel of the foreground image portion F11. When the depth is greater than or equal to the threshold, the pixel is adopted as a pixel of the background image portion F12. The threshold is a constant stored in advance in the image dividing unit 13.

A variable indicating each pixel is denoted by n=0, 1, 2, .... A variable for discriminating the foreground image portion F11 and the background image portion F12 from each other is denoted by Px(n). A variable indicating the depth of each pixel is denoted by Depth(n). The threshold is denoted by Th1. Then, Px(n) is expressed by the following formulas (1) and (2).

$$Px(n) = background \ (Th1 < Depth(n)) \ ...(1)$$

$$Px(n) = foreground \ (Th1 \geq Depth(n)) \ ...(2)$$

FIGS. 4A and 4B are explanation diagrams conceptually illustrating the foreground image portion F11 and the background image portion F12, respectively. When the threshold Th1 is 2, on the basis of the depth image G1 illustrated in FIG. 3 and the threshold Th1=2, the video image F1 illustrated in FIG. 2 is divided into the foreground image portion F11 (a white region surrounded by a solid line in FIG. 4A) and the background image portion F12 (a white region surrounded by a solid line in FIG. 4B (a region other than a gray region surrounded by a broken line)).

Here, in the description given above, the threshold Th1 has been a value stored in advance in the image dividing unit 13. Instead, the viewing person who uses the video processing device 1 may arbitrarily set up this value. Further, the threshold Th1 may be obtained by calculation. For example, the threshold Th1 is expressed by the following formula

(3).

$$Th=(\textstyle\sum Depth(n))/(w*h) \dots(3)$$

Here, n is an integer of 0, 1, 2, ..., w*h. Symbol h denotes the height of the video image F1 (the number of pixels arranged in a vertical direction). Symbol w denotes the width of the video image F1 (the number of pixels arranged in a horizontal direction).

<Pop-out information obtaining unit>

The pop-out information obtaining unit 14 obtains pop-out information indicating the direction of pop-out set for each object in the video image F1, and then outputs the obtained pop-out information to the frame object generating unit 15. Here, the direction of pop-out indicates information specifying a direction in which the feeling of pop-out should be provided when pop-out of each object in the video image is to be enhanced.

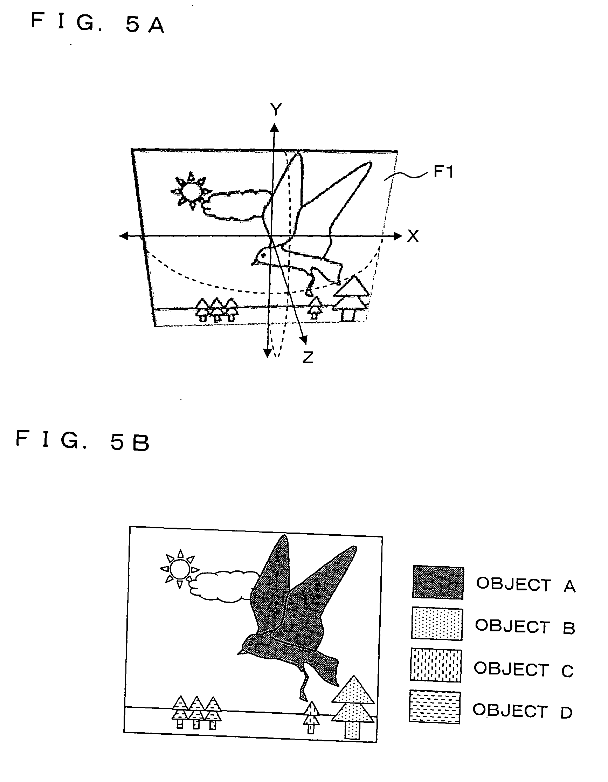

FIGS. 5A and 5B are explanation diagrams conceptually illustrating pop-out information. As illustrated in FIG. 5A, the pop-out information is expressed, for example, by a three-dimensional vector in a three-dimensional space where the longitudinal direction (vertical direction) of the video image F1 is adopted as the Y-axis, the lateral direction (horizontal direction) is adopted as the X-axis, and a virtual axis in the forward and backward directions perpendicular to the video image surface is adopted as the Z-axis. It is assumed that this pop-out information is specified for each object as illustrated in FIG. 5B. Here, in the present embodiment, the pop-out information is treated as a normalized unit vector.

<Frame object generating unit>

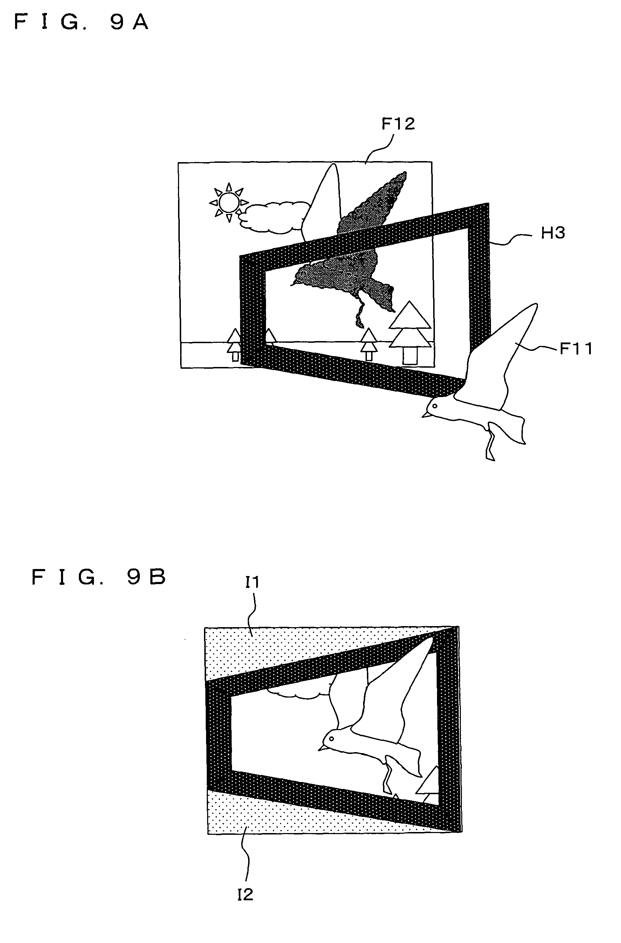

The frame object generating unit 15 has: a storage unit 15a storing information providing the basis of a frame object H3 (see FIG. 9) used for enhancing the depth of the video image; a rotation processing unit 15b and a projective transformation unit 15c determining the shape for the frame object H3 on the basis of the pop-out information; and a color determining unit 15d determining the luminance and the color for the frame object H3 on the basis of the luminance and the color of the foreground image portion F11 and the background image portion F12. Here, the frame object H3 is an object inserted between the foreground image portion F11 and the background image portion F12 so as to provide the feeling of relative distance to the foreground and the background so that the viewing person receives the stereoscopic vision and perceived depth. In the present embodiment, as the frame object H3, a video image is generated that has a frame shape surrounding the outer periphery of the video image F1.

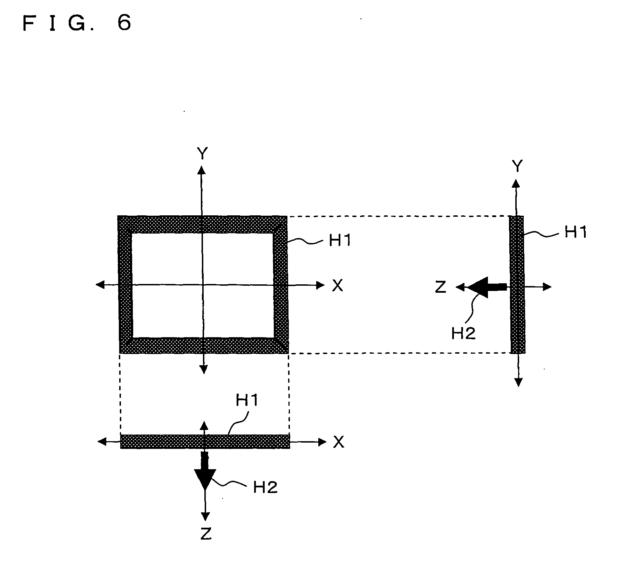

The storage unit 15a stores in advance the information providing the basis of the frame object H3. Specifically, a three-dimensional image in a three-dimensional space is stored. In the following description, this three-dimensional image is referred to as the original three-dimensional frame object H1 (see FIG. 6).

FIG. 6 is an explanation diagram conceptually illustrating the original three-dimensional frame object H1. The original three-dimensional frame object H1 has its center located at the origin in a three-dimensional space and has a rectangular frame shape approximately in parallel to the XY plane. Symbol H2 indicates the normal vector H2 of the original three-dimensional frame object H1.

First, the frame object generating unit 15 determines the shape for the frame object H3 on the basis of the original three-dimensional frame object H1 and the pop-out information.

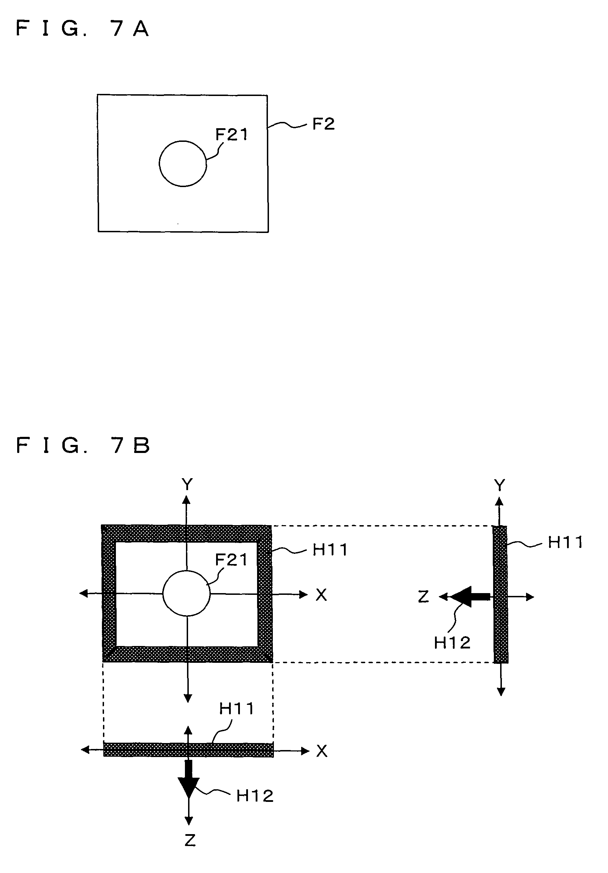

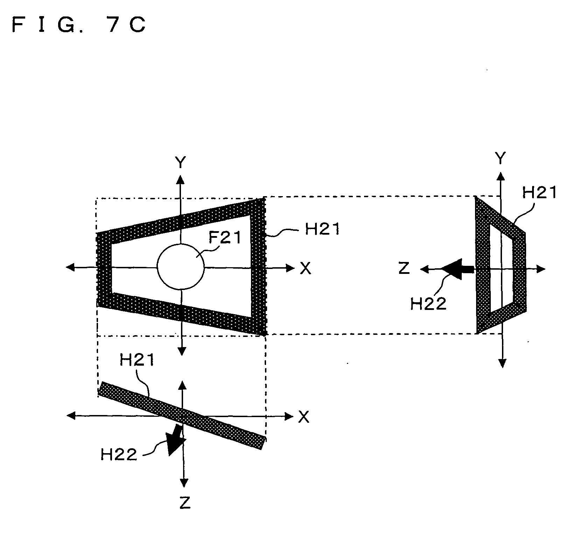

FIGS. 7A to 7C are explanation diagrams conceptually illustrating a shape determining method for the frame object H3. Here, as illustrated in FIG. 7A, it is assumed that an object F21 is present in a video image F2 and that its pop-out information is specified. Here, the video image F2 is a simplified version of the video image F1 prepared for the purpose of description of the generating method for the frame object H3. The shape for the frame object H3 is obtained by rotating (that is, imparting an inclination to) the original three-dimensional frame object H1 within the virtual three-dimensional space illustrated in FIG. 7B in accordance with the pop-out direction and then projecting the inclined three-dimensional frame objects H11 and H21 (see FIG. 7C) onto the XY plane. Detailed description is given below.

First, an inclination vector is calculated that sets forth the inclination of the original three-dimensional frame object H1. The inclination vector is expressed by the following formula (4).

$$(x1, y1, z1)=(a*x, b*y, c*z) \dots(4)$$

Here, (x1, y1, z1) is pop-out information. Symbols a, b, and c are constants ($0 \leq a$, b, $c \leq 1.0$) stored in advance in the frame object generating unit 15.

Then, the rotation processing unit 15b rotates the original three-dimensional frame object H1 such that the normal vector H2 of the original three-dimensional frame object H1 agrees with the inclination vector (x1, y1, z1).

Then, the projective transformation unit 15c converts the rotated three-dimensional frame objects H11 and H21 into a two-dimensional shape by orthogonal projection onto the XY plane, and then stores the two-dimensional shape as the shape for the frame object H3.

For example, as illustrated in FIG. 7B, in a case that the pop-out information concerning the object F21 is given as (0, 0, 1) and that a=1.0, b=1.0, and c=1.0, the inclination vector is equal to (0, 0, 1). Then, the rotation processing unit 15b rotates the original three-dimensional frame object H1 such that the normal vector H2 of the original three-dimensional frame object H1 agrees approximately with the inclination vector (0, 0, 1). The final shape obtained by projecting, onto the XY plane, the three-dimensional frame object H11 having undergone rotation process is as illustrated in the XY plane in FIG. 7B.

Further, as illustrated in FIG. 7C, in a case that the pop-out information concerning the object F21 is given as (x, 0, $\sqrt{(1-x^2)}$) and that a=1.0, b=1.0, and c=1.0, the inclination vector is equal to (x, 0, $\sqrt{(1-x^2)}$). Then, the rotation processing unit 15b rotates the original three-dimensional frame object H1 such that the normal vector H2 of the original three-dimensional frame object H1 agrees approximately with the inclination vector (x, 0, $\sqrt{(1-x^2)}$). The final shape obtained by projecting, onto the XY plane, the three-dimensional frame object H21 having undergone rotation process is as illustrated in the XY plane in FIG. 7C.

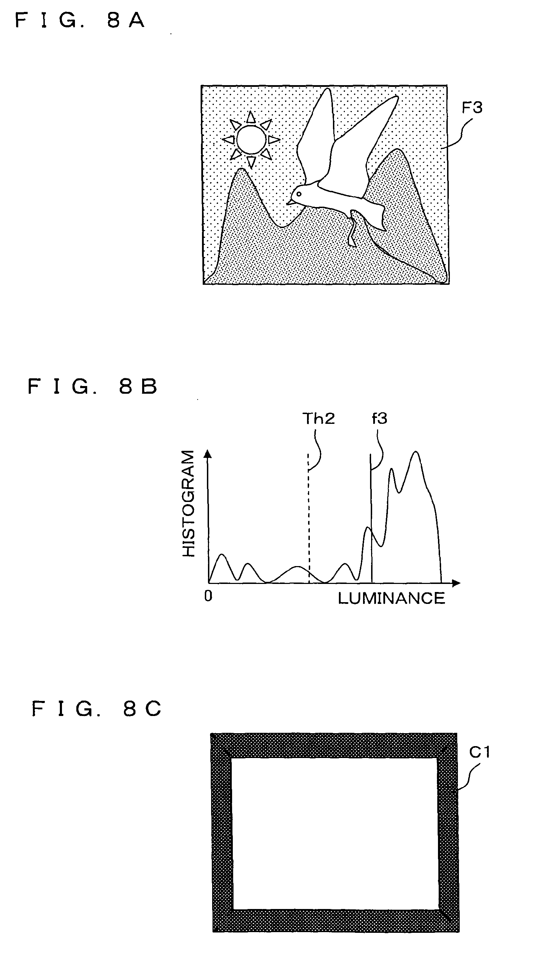

Then, the frame object generating unit 15 determines the luminance and the color for the frame. FIGS. 8A to 8F are explanation diagrams conceptually illustrating a determining method for the luminance and the color for the frame object H3. The color determining unit 15d determines the color for the frame object H3 on the basis of the luminance of the entire video image, that is, on the basis of the luminance of both of the foreground image portion F11 and the background image portion F12. FIG. 8A illustrates a video image F3 obtained by the image obtaining unit 11 at one particular time point. FIG. 8B illustrates a luminance histogram for the video image F3, where the average of the luminance of the video image F3 is indicated as f3. The color determining unit 15d stores in advance: a threshold Th2; color C1 for the frame object H3 to be adopted when the average luminance f3 is higher than or equal to the threshold Th2; and color C2 for the frame object H3 to be adopted when the average luminance is lower than the threshold Th2. Here, the color C1 and the color C2 have mutually different luminance values. The average luminance f3 of the video image F3 is higher than or equal to the threshold Th2. Thus, as illustrated in FIG. 8C, the color determining unit 15d determines C1 as the color for the frame object H3.

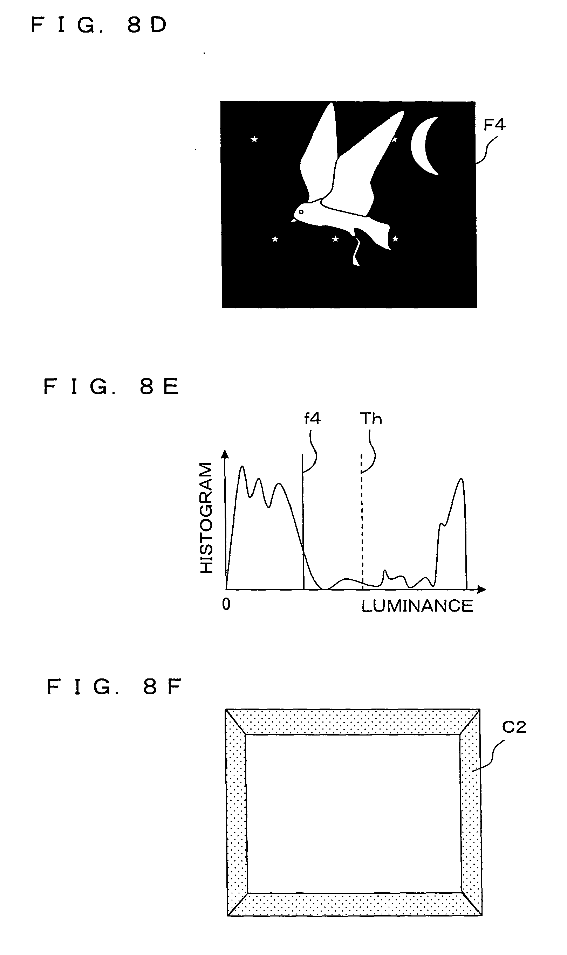

Similarly, FIG. 8D illustrates a video image F4 obtained by the image obtaining unit 11 at another time point. FIG. 8E illustrates a luminance histogram for the video image F4, where the average of the luminance of the video image F4 is indicated as f4. The average luminance f4 of the video image F4 is lower than the threshold Th2. Thus, as illustrated in FIG. 8F, the color determining unit 15d determines the color C2 as the color for the frame object H3.

Here, the color for the frame object H3 is not limited to particular one. However, it is preferable that when the average luminance is higher than or equal to the threshold Th2, color having a luminance lower than the threshold Th2 is adopted, and that when the average luminance is lower than the threshold Th2, color having a luminance higher than the threshold Th2 is adopted.

Further, it is preferable that a constant d is stored in advance in the color determining unit 15d and then the luminance for the frame object H3 is determined by the following formulas (5) and (6).

$$\text{luminance for frame object H3} = \text{average luminance} - d \text{ (average luminance} \geq \text{threshold Th2)} \quad ...(5)$$

$$\text{luminance for frame object H3} = \text{average luminance} + d$$

$$\text{(average luminance} < \text{threshold Th2)} \quad ...(6)$$

Further, a configuration may be employed that a translucent frame object H3 is generated on the basis of the background image portion F12. In a case that the frame object H3 is translucent, even when the background image portion F12 is covered by the frame object H3, the viewing person partly recognizes the contents of the covered background image portion F12. Thus, the amount of loss in the information of the video image is reduced and, yet, enhancement of the depth of the video image is achieved.

Further, the frame object H3 may be arranged as an object imitating a frame for painting, a frame of window, a frame of television set, and the like.

Further, description has been given above for an example that color C1 or C2 for the frame object H3 is determined on the basis of the luminance of the video images F3 and F4. Instead, a configuration may be employed that the color for the frame object H3 is determined into one different from the color of the video image on the basis of the color of the video image F3 and F4, for example, on the basis of the average saturation. Further, a configuration may be employed that the luminance and the color for the frame object H3 are determined on the basis of the luminance and the color of the video images F3 and F4.

Further, description has been given above for an example that the color and the luminance for the frame object H3 are determined on the basis of the luminance of the entire video image. Instead, the color and the luminance for the frame object H3 may be determined on the basis of the average luminance of only the foreground image portion F11. That is, the color and the luminance for the frame object H3 may be determined such that the luminance of the foreground image portion F11 and the luminance for the frame object H3 should differ from each other. In this case, the difference between the frame object H3 and the foreground image portion F11 is obvious. Thus, effective enhancement of the depth of the foreground image portion F11 is achieved.

Similarly, the color and the luminance for the frame object H3 may be determined on the basis of the average luminance of only the background image portion F12. That is, the color and the luminance for the frame object H3 may be determined such that the luminance of the background image portion F12 and the luminance for the frame object H3 should differ from each other. In this case, the difference between the frame object H3 and the background image portion F12 is obvious. Thus, effective enhancement of the depth of the background image portion F12 is achieved.

Further, a configuration may be employed that the average luminance is calculated separately for the foreground image portion F11 and for the background image portion F12 and then the luminance and the color for the frame object H3 are determined such that each calculated average luminance and the luminance for the frame object H3 should differ from each other. In this case, the difference between the frame object H3, the foreground image portion F11, and the background image portion F12 is obvious. This permits effective enhancement of the depth of the foreground image portion F11 and the background image portion F12.

The frame object generating unit 15 generates a frame object H3 having the shape determined by the projective transformation unit 15c and the color determined by the color determining unit 15d, and then outputs the generated frame object H3 to the image combining unit 16.

<Image combining unit>

FIGS. 9A and 9B are explanation diagrams conceptually illustrating the contents of process in the image combining unit 16. The image combining unit 16 receives: the foreground image portion F11 and the background image portion F12 outputted from the image dividing unit 13; and the frame object H3 outputted from the frame object generating unit 15. Then, as illustrated in FIGS. 9A and 9B, the image combining unit 16 combines the background image portion F12, the frame object H3, and the foreground image portion F11 such that the frame object H3 is superposed on the background image portion F12 and then the foreground image portion F11 is superposed on the frame object H3. Further, when the shape and the dimensions of the video image and the frame object H3 do not agree with each other, a region occurs outside the frame object H3 as illustrated in FIG. 9B. However, the image combining unit 16 combines given complementary video images I1 and I2 in the region such that the background image portion F12 that falls outside the frame object H3 is not displayed. Here, the foreground image portion F11 falling outside the frame object H3 is displayed intact. That is, the foreground image portion F11 is displayed such as to be superposed on the complementary video images I1 and I2. For example, the complementary video images I1 and I2 are arbitrary video images like a monochromatic video image and a texture of a wall. If the background image portion F12 falling outside the frame object H3 were displayed intact, the viewing person could erroneously recognize the depth of the background image portion F12. However, since the complementary video images I1 and I2 cover the image portion falling outside the frame object H3, erroneous perception of the depth is avoided and hence effective enhancement of the depth of the video image is achieved.

Here, when a video image around the display device is allowed to be obtained, such a video image may be displayed as the complementary video image.

The image combining unit 16 outputs to an external display unit 2 the combined video image obtained by combining the background image portion F12, the frame object H3, and the foreground image portion F11.

The display unit 2 is composed of a liquid crystal display panel, a plasma display, an organic EL (Electro-Luminescence) display, or the like, and receives the combined video image outputted from the video processing device 11 and then displays the combined video image.

Here, in this example, the display unit 2 has been employed an output destination for the combined video image. Instead, an output device of diverse kind such as a printer and a transmitting device may be adopted as long as the device is capable of outputting the combined video image.

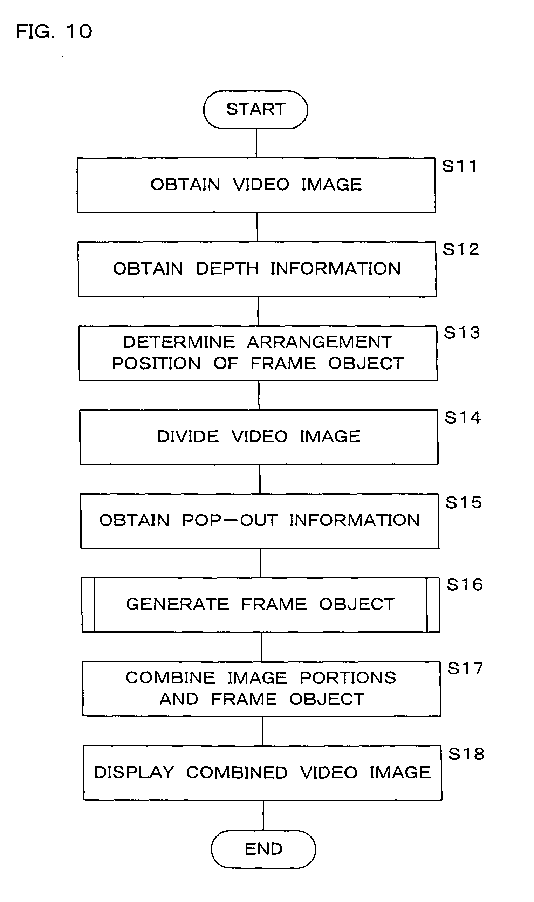

FIG. 10 is a flowchart illustrating the flow of a video processing method to be executed in the video processing device 1. When an instruction of process operation start is provided, each component unit starts operation. That is, the image obtaining unit 11 obtains a video image inputted to the video processing device 1, and then outputs the obtained video image to the image dividing unit 13 (step S11). Then, the depth information obtaining unit 12 obtains depth information inputted to the video processing device 1, and then outputs the obtained depth information to the image dividing unit 13 (step S12).

Then, the image dividing unit 13 receives the video image and the depth information, and then determines the arrangement position of the frame object H3 on the basis of the video image and the depth information (step S13). Then, on the basis of the depth information, the video image, and the arrangement position of the frame object H3, the image dividing unit 13 divides the video image into the foreground image portion F11 and the background image portion F12, and then outputs the foreground image portion F11 and the background image portion F12 obtained by dividing, to the frame object generating unit 15 and the image combining unit 16 (step S14).

Then, the pop-out information obtaining unit 14 obtains the pop-out information inputted to the video processing device 1, and then outputs the obtained pop-out information to the frame object generating unit 15 (step S15).

Then, the frame object generating unit 15 generates the frame object H3, and then outputs the generated frame object H3 to the image combining unit 16 (step S16).

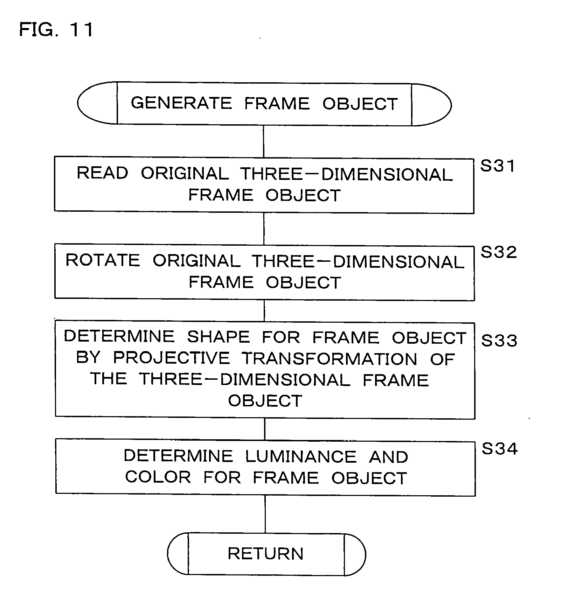

FIG. 11 is a flowchart illustrating the flow of operation of the frame object generating unit 15. The frame object generating unit 15 reads the original three-dimensional frame object H1 from the storage unit 15a (step S31). Then, the rotation processing unit 15b of the frame object generating unit 15 executes the process of rotating the original three-dimensional frame object H1 in accordance with the pop-out information (step S32). Then, the projective transformation unit 15c determines the shape for the frame object H3 by projective transformation of the three-dimensional frame objects H11 and H21 having undergone the rotation process (step S33).

Then, on the basis of the luminance and the color of the video image, the color determining unit 15d determines the luminance and the color for the frame object H3 (step S34), and then completes the process relevant to the generation of the frame object H3.

After the process at step S16, the image combining unit 16 receives the foreground image portion F11 and the background image portion F12 as well as the frame object H3, then combines the background image portion F12, the frame object H3, and the foreground image portion F11 in superposition in this order, then combines the complementary video images I1 and I2, and then outputs to the display unit 2 the combined video image obtained by combining (step S17).

Then, the display unit 2 receives the combined video image outputted from the image combining unit 16, then displays the combined video image (step S18), and then completes the process.

A video image process procedure performed on a video image of one frame has been described above. In a case that video images of plural frames constituting a video are to be processed, it is sufficient that similar video image process is performed on each video image.

Here, in a case of video images of plural frames, when the arrangement position, the shape, and the color of the frame object H3 are changed rapidly, a possibility arises that the viewing person feels uneasiness. Thus, a low-pass filter may be employed for suppressing at constant the amount of change in: the arrangement position determined for each of adjacent video images arranged in the order of time series; and the shape and the color having been generated.

In the video processing device 1 and the video processing method constructed as described above, the perceived depth of a video image is improved by image process alone without the use of a dedicated video display device and special glasses.

Here, the video processing device 1 and the video processing method according to the present embodiment is allowed to be applied to: a television set such as a liquid crystal television set, an organic electroluminescence television set, and a plasma television set provided with the display unit 2; a portable device of diverse kind such as a still camera, a video camera, a portable telephone, and a PDA (Personal Digital Assistants) provided with the display unit 2; a personal computer; an information display; a BD (Blu-ray Disc: registered trademark) recorder that outputs a video image; a recorder of diverse kind such as a DVD (Digital Versatile Disc) recorder and an HDD (Hard Disk Drive) recorder; a digital photo frame; and furniture or home electric appliance of other kind provided with a display.

(Modification 1)

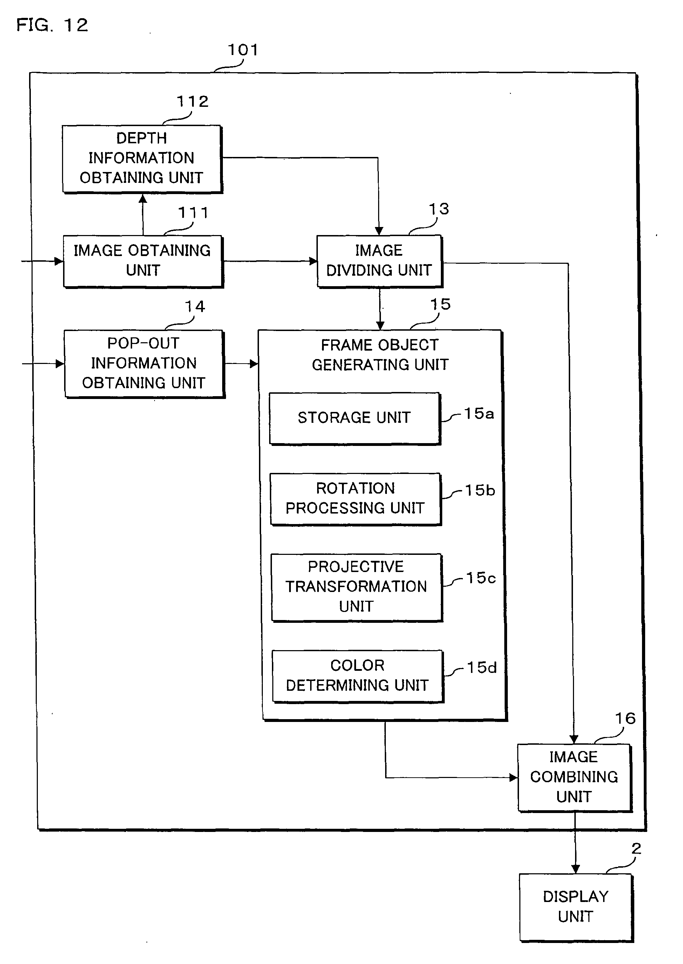

FIG. 12 is a block diagram illustrating an exemplary configuration of a video processing device 101 according to modification 1. In the embodiment given above, depth information has been obtained separately from a video image. In contrast, in the video processing device 101 according to modification 1, depth information is obtained from a video image obtained by the image obtaining unit 111, by various kinds of arithmetic operation. Specifically, the image obtaining unit 111 and the depth information obtaining unit 112 have different configurations. Thus, the following description is given mainly for the difference.

The image obtaining unit 111 obtains a video image serving as a target of video image process of improving the stereoscopic vision or the perceived depth, and then outputs the obtained video image to the image dividing unit 13 and, at the same time, to the depth information obtaining unit 112.

The depth information obtaining unit 112 receives the video image outputted from the image obtaining unit 111, then calculates depth information on the basis of the inputted video image, and then outputs the depth information obtained by calculation to the image dividing unit 13.

The calculation method of depth information may be, for example, the method disclosed in Japanese Patent Application Laid-Open No. H9-161074.

Further, when the video image is encoded by a particular method, the depth information may be generated from the encoded information. For example, in a case of MPEG-4 (Moving Picture Expert Group phase4) which has been produced by Moving Picture Experts Group (MPEG) and is one of common video standards, encoding is allowed to be performed by the unit of each individual object like a background and a person. Thus, in the video image, when a background and a person are encoded independently by using this function, depth information is generated by using this information.

In modification 1, even when depth information is not provided to the video processing device 101, dividing of the video image into the foreground image portion F11 and the background image portion F12, and inserting of the frame object H3, are achieved so that enhancement of the depth of the video image is achieved.

(Modification 2)

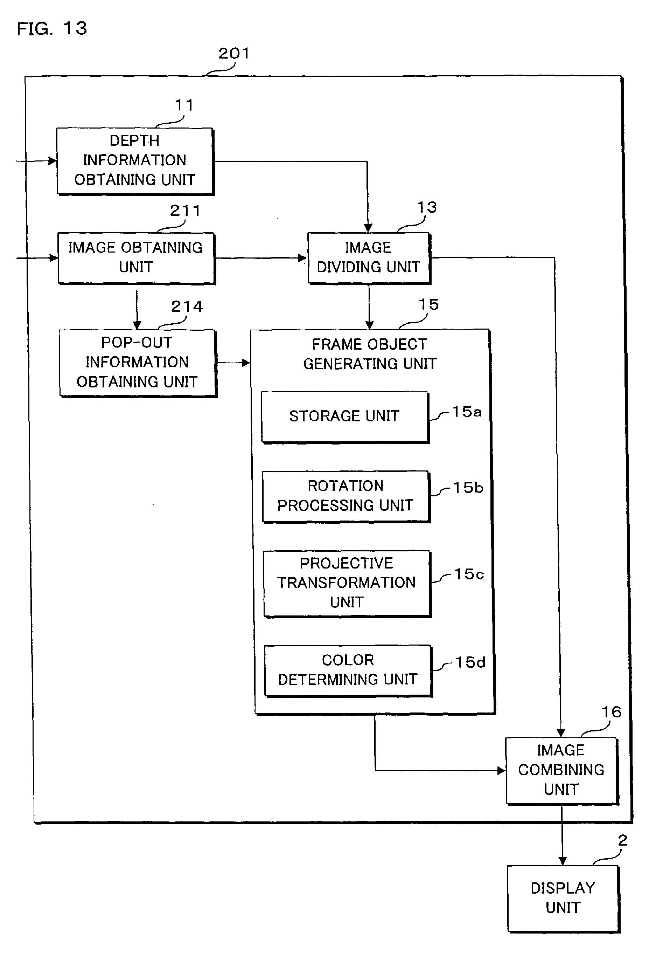

FIG. 13 is a block diagram illustrating an exemplary configuration of a video processing device 201 according to modification 2. In the embodiment given above, pop-out information has been obtained separately from a video image. In contrast, in the video processing device 201 according to modification 2, pop-out information is obtained from a video image obtained by the image obtaining unit 211, by various kinds of arithmetic operation. Specifically, the image obtaining unit 211 and the pop-out information obtaining unit 214 have different configurations. Thus, the following description is given mainly for the difference.

The image obtaining unit 211 obtains a video image serving as a target of video image process of improving stereoscopic vision or perceived depth, in particular, a video image in which encoding has been performed by the unit of each individual object like a background and a person, and then outputs the obtained video image to the image dividing unit 13 and, at the same time, to the pop-out information obtaining unit 214.

The pop-out information obtaining unit 214 calculates the change in the moving direction and the size of the object in the video images constituting successive frames. Then, on the basis of the amount of movement of the object in the horizontal direction, the pop-out information obtaining unit 214 calculates the X-axis vector component for the pop-out information. In the three-dimensional space illustrated in FIG. 7, when the object moves in the positive X-axis direction, the X-axis vector component of the pop-out information is set to be a positive value. Further, a larger value is set up for a larger amount of movement of the object. On the contrary, when the object moves in the negative X-axis direction, the X-axis vector component of the pop-out information is set to be a negative value, and a larger absolute value is set up for a larger amount of movement of the object.

Similarly, on the basis of the amount of movement of the object in the vertical direction, the pop-out information obtaining unit 214 calculates the Y-axis vector component for the pop-out information.

Further, when the change is in a direction that the size of the object becomes large, the pop-out information obtaining unit 214 sets the Z-axis vector component of the pop-out information to be a positive value, which has a larger value when the amount of change of the size of the object is larger. On the contrary, when the change is in a direction that the size of the object becomes small, the X-axis vector component of the pop-out information is set to be a negative value, which has a larger absolute value when the amount of change of the size of the object is larger.

In modification 2, even when pop-out information is not provided to the video processing device 201, dividing of the video image into the foreground image portion F11 and the background image portion F12, and inserting of the frame object H3, are achieved so that enhancement of the depth of the video image is achieved.

Here, by combining modification 1 and modification 2 with each other, a configuration may be employed that depth information and pop-out information are calculated from the video image inputted to the video processing device 201. In this case, enhancement of the depth of the video image is achieved even when both of the depth information and the pop-out information are not provided to the video processing device 201.

(Modification 3)

In the embodiment given above, the frame object H3 having the shape of a frame for painting has been illustrated as the depth-enhancing image in which the depth of the video image is enhanced. In contrast, the video processing device 1 according to modification 3 has a configuration that a curtain object H301 is displayed in place of the frame object H3. Specifically, the video processing device 1 according to modification 3 has a curtain object generating unit (not illustrated) in place of the frame object generating unit 15.

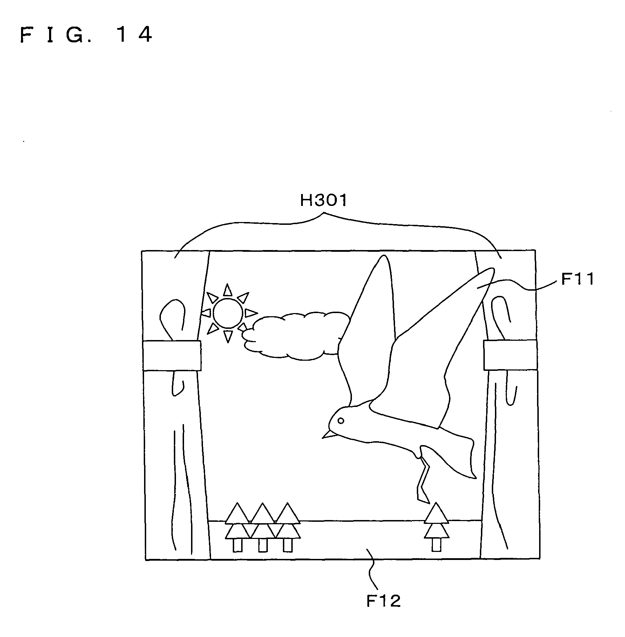

FIG. 14 is a schematic diagram illustrating a curtain object H301 serving as an example of a depth-enhancing image. The curtain object generating unit stores a curtain object H301 having a curtain shape located on both sides of the video image in the horizontal direction, and outputs the curtain object H301 to the image combining unit 16. The shape and the color of the curtain object H301 are fixed regardless of the contents of the video image. Here, needless to say, a configuration may be employed that the curtain object generating unit receives the foreground image portion F11 and the background image portion F12, and then changes the color and the luminance for the curtain object H301 on the basis of the luminance of the foreground image portion F11 and the background image portion F12. Alternatively, a configuration may be employed that an original three-dimensional curtain object having a three-dimensional shape is stored in advance, then pop-out information is inputted, and then the curtain object H301 having a two-dimensional shape is generated by rotation and projective transformation of the original three-dimensional curtain object based on the pop-out information.

The example of a depth-enhancing image has been the shape of a frame for painting in the embodiment given above, and has been a curtain shape in modification 3. However, the shape of the depth-enhancing image is not limited to these as long as the depth of the video image is allowed to be enhanced. For example, a depth-enhancing image having the shape of curled parentheses may be adopted. Here, it is preferable that the depth-enhancing image is located on an edge side of the video image in order that the main part of the background video image should not be hidden.

(Modification 4)

In the embodiment given above, as illustrated in FIG. 7B, when the pop-out information concerning the video image has Z-axis component alone, the shape of the frame object H403 is not deformed in particular and hence pop-out in the Z-axis direction is not enhanced. In the video processing device 1 according to modification 4, when pop-out information has a Z-axis component alone, the shape for the frame object H403 is changed such as to be pushed out in the Z-axis direction so that pop-out in the Z-axis direction, that is, toward the viewing person, is enhanced. Difference from the embodiment given above is only the contents of process in the frame object generating unit 15. Thus, the following description is given mainly for this difference.

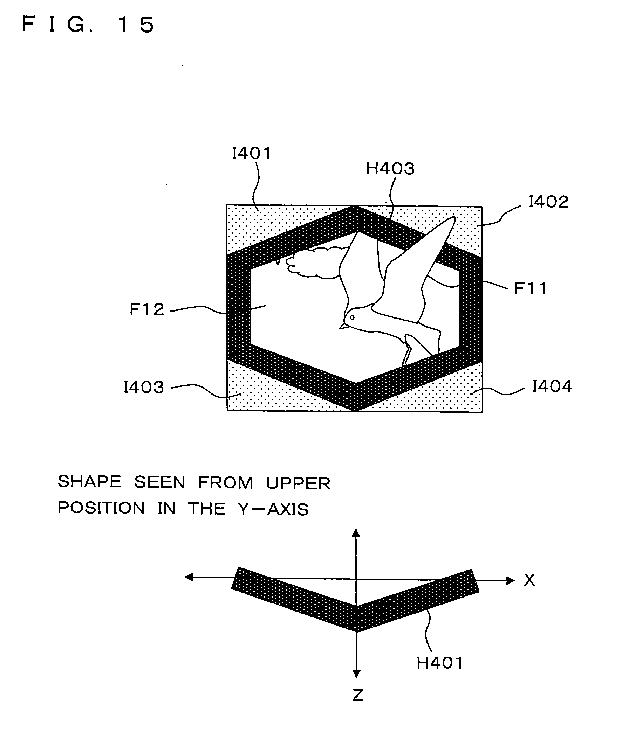

FIG. 15 is an explanation diagram conceptually illustrating a shape determining method for a frame object H403 according to modification 4. When the pop-out information includes only Z-axis component, or alternatively when the Z-axis component is greater than the X-axis component and the Y-axis component by an amount greater than or equal to a given value especially in a case that the Z-axis component is positive, as illustrated in FIG. 15, the frame object generating unit 15 bends the original three-dimensional frame object H401 such that the approximate center portions in the horizontal direction form peaks and pop out in the positive X-axis direction, and deforms the original three-dimensional frame object H401 into a stereographic shape such that the horizontal frame portions (the longer-side portions of the frame) are expanded in the vertical directions. Then, the frame object generating unit 15 calculates a two-dimensional shape to be obtained by projective transformation of the deformed three-dimensional frame object H401 onto the XY plane, and then determines the calculated two-dimensional shape as the shape for the frame object H403.

On the contrary, when the Z-axis component is negative, the frame object generating unit 15 bends the original three-dimensional frame object H401 such that the approximate center portions in the horizontal direction form bottoms and pop out in the negative X-axis direction, and deforms the original three-dimensional frame object H401 into a stereographic shape such that the horizontal frame portions (the longer-side portions of the frame) are compressed in the vertical directions. Then, the frame object generating unit 15 calculates a two-dimensional shape to be obtained by projective transformation of the deformed three-dimensional frame object H401 onto the XY plane, and then determines the calculated two-dimensional shape as the shape for the frame object.

The contents of process in the image combining unit 16 are similar to those of the embodiment given above. The image combining unit 16 combines onto the background image portion F12 in superposition the frame object H403, the complementary video images I401, I402, I403, and I404, and the foreground image portion F11 in the order, and then outputs to the outside the combined image portion obtained by combining.

In the video processing device 1 and the video processing method according to modification 4, enhancement of the feeling of pop-out is achieved even for: a video image in which an object pops out in the Z-axis direction, that is, to the near side; and a video image in which two objects pop out to the near side and the pop-out directions of these are left and right and hence mutually different, like in a case that a person located in the center extends the hands toward the left and the right edges of the screen.

(Modification 5)

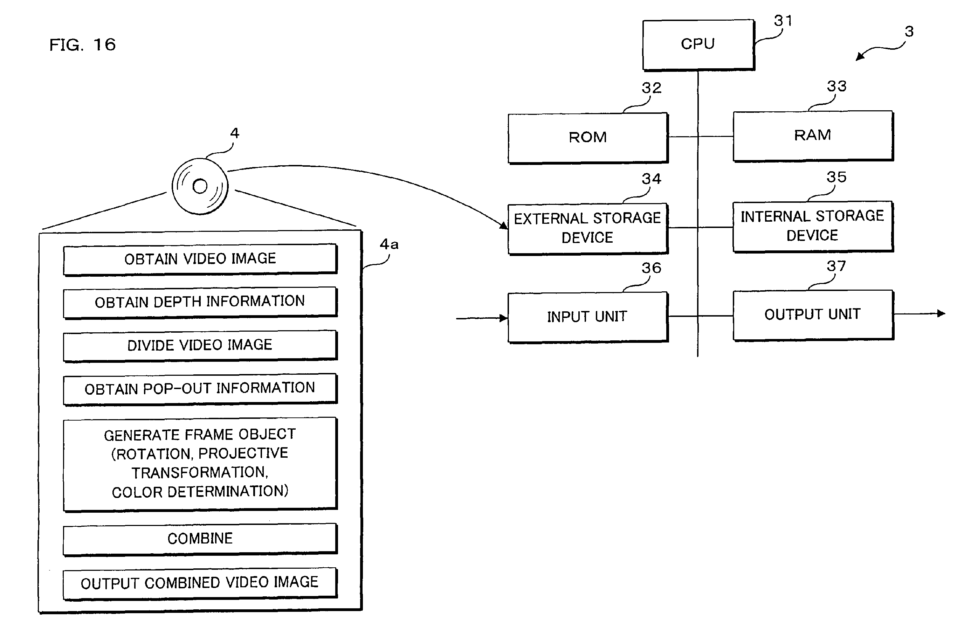

FIG. 16 is a block diagram illustrating a video processing device according to modification 5. The video processing device according to modification 5 is realized by a computer 3 executing a computer program 4a according to the present invention.

The computer 3 has a CPU (Central Processing Unit) 31 controlling the entire device. The CPU 31 is connected to: a ROM (Read Only Memory) 32; a RAM (Random Access Memory) 33 storing temporary information generated in association with arithmetic operation; an external storage device 34 reading a computer program 4a from a memory product 4a, such as a CD-ROM, storing computer program 4a according to an embodiment of the present invention; and an internal storage device 35 such as a hard disk storing the computer program 4a read from the external storage device 34. The CPU 31 reads the computer program 4a from the internal storage device 35 onto the RAM 33 and then executes various kinds of arithmetic operation, so as to implement the video processing method according to the present invention. The process procedure of the CPU 31 is as illustrated in FIGS. 10 and 11. That is, the process procedure at steps S11 to S18 and steps S31 to S34 is executed. The process procedure is similar to the contents of process of the component units of the video processing device 1 according to the embodiment given above and modification 4. Thus, detailed description is omitted.

In the computer 3 and the computer program 4a according to modification 5, the computer 3 is operated as the video processing device according to the embodiment given above, and further the video processing method according to the embodiment given above is implemented. Thus, an effect similar to that of the embodiment given above and modifications 1 to 4 is obtained.

Here, needless to say, the computer program 4a according to the present modification 5 is not limited to one recorded on the memory product 4, and may be downloaded through a communication network of cable or wireless and then stored and executed.

Further, it should be noted that the embodiment disclosed here is illustrative and not restrictive at all points. The scope of the present invention is defined not by the description given above but by the claims, and includes any kinds of change within the scope and the spirit equivalent to those of the claims.

EXPLANATION OF CODES

| | |
|---|---|
| 1 | video processing device |
| 2 | output unit |
| 3 | computer |
| 4 | memory product |
| 4a | computer program |
| 11 | image obtaining unit |
| 12 | depth information obtaining unit |
| 13 | image dividing unit |
| 14 | pop-out information obtaining unit |
| 15 | frame object generating unit |
| 16 | image combining unit |
| 15a | storage unit |
| 15b | rotation processing unit |
| 15c | projective transformation unit |
| 15d | color determining unit |
| 31 | CPU |
| 32 | ROM |
| 33 | RAM |
| 35 | external storage device |
| 36 | input unit |
| 37 | output unit |
| F11 | foreground image portion |
| F12 | background image portion |
| H1 | original three-dimensional frame object |
| H3 | frame object |

**Claims**

1. A video processing device for enhancing perceived depth of an inputted video image, **characterized by** comprising:

   depth information obtaining means for obtaining depth information indicating distance in the depth direction of each of a plurality of image portions included in the video image;

   image dividing means for dividing the video image, on the basis of the depth information obtained by the depth information obtaining means and on the basis of the video image, into a plurality of image portions having mutually different distances in the depth direction; and

   image combining means for combining the image portions divided by the image dividing means and a depth-enhancing image used for enhancing the depth of the video image such that the depth-enhancing image is superposed onto one image portion and further that the other image portion having a shorter distance in the depth direction than the one image portion is superposed onto the depth-enhancing image.

2. The video processing device according to claim 1, comprises

   generating means for generating, on the basis of luminance or color of the inputted video image, a depth-enhancing image having luminance or color different from that of the video image,

   wherein the image combining means combines the depth-enhancing image generated by the generating means.

3. The video processing device according to claim 2,

   wherein the generating means generates, on the basis of the luminance or the color of one image portion and/or the other image portion divided by the image dividing means, a depth-enhancing image having luminance or color different from that of the image portion.

4. The video processing device according to claim 2 or 3, comprises:

   a configuration such that a plurality of video images are inputted in the order of time series; and

   moving direction information obtaining means for obtaining moving direction information indicating a moving direction of an image portion between the video images inputted in the order of time series,

   wherein the generating means generates a depth-enhancing image having a shape in accordance with the moving direction information obtained by the moving direction information obtaining means.

5. The video processing device according to claim 1, comprises:

   a configuration such that a plurality of video images are inputted in the order of time series;

   moving direction information obtaining means for obtaining moving direction information indicating a moving direction of an image portion between the video images inputted in the order of time series; and

   generating means for generating a depth-enhancing image having a shape in accordance with the moving direction information obtained by the moving direction information obtaining means,

   wherein the image combining means combines the depth-enhancing image generated by the generating means.

6. The video processing device according to claim 4 or 5, comprises storage means for storing a given three-dimensional image,

   wherein the generating means

   comprises rotation processing means for rotating the three-dimensional image stored in the storage means such that the three-dimensional image and the moving direction indicated by the moving direction information obtained by the moving direction information obtaining means should be in a given positional relation with each other, and generates a depth-enhancing image having a two-dimensional shape obtained by projecting, onto a given two-dimensional plane, the three-dimensional image rotated by the rotation processing means.

7. A video processing method for enhancing perceived depth of an inputted video image, **characterized by** comprising the steps of:

   obtaining depth information indicating distance in the depth direction of each of a plurality of image portions included in the video image;

   dividing the video image, on the basis of the obtained depth information and the video image, into a plurality of image portions having mutually different distances in the depth direction; and

   combining the divided image portions and a depth-enhancing image used for enhancing the depth of the video image such that the depth-enhancing image is superposed onto one image portion and further that the other image portion having a shorter distance in the depth direction than the one image portion is superposed onto the depth-enhancing image.

8. A computer program for causing a computer to execute process of enhancing perceived depth of a video image, **characterized by** comprising the steps of:

causing the computer to divide the video image, on the basis of depth information indicating distance in the depth direction of each of a plurality of image portions included in the video image and on the basis of the video image, into a plurality of image portions having mutually different distances in the depth direction; and causing the computer to combine the divided image portions and a depth-enhancing image used for enhancing the depth of the video image such that the depth-enhancing image is superposed onto one image portion and further that the other image portion having a shorter distance in the depth direction than the one image portion is superposed onto the depth-enhancing image.

FIG. 1

FIG. 2

FIG. 3

EP 2 416 582 A1

**F I G.  4 A**

F11

**F I G.  4 B**

F12

19

FIG. 5A

FIG. 5B

OBJECT A

OBJECT B

OBJECT C

OBJECT D

20

F I G. 6

F I G. 7 A

F I G. 7 B

F I G.  7 C

FIG. 8A

F3

FIG. 8B

FIG. 8C

C1

# F I G. 8 D

F4

# F I G. 8 E

f4　　Th

HISTOGRAM

0　　LUMINANCE

# F I G. 8 F

C2

F I G. 9 A

F12

H3

F11

F I G. 9 B

I1

I2

FIG. 10

```
        ( START )
            │
    ┌───────────────────────┐  S11
    │   OBTAIN VIDEO IMAGE   │
    └───────────────────────┘
            │
    ┌───────────────────────┐  S12
    │ OBTAIN DEPTH INFORMATION │
    └───────────────────────┘
            │
    ┌───────────────────────┐  S13
    │ DETERMINE ARRANGEMENT  │
    │ POSITION OF FRAME OBJECT │
    └───────────────────────┘
            │
    ┌───────────────────────┐  S14
    │   DIVIDE VIDEO IMAGE   │
    └───────────────────────┘
            │
    ┌───────────────────────┐  S15
    │ OBTAIN POP-OUT INFORMATION │
    └───────────────────────┘
            │
    ┌───────────────────────┐  S16
    │  GENERATE FRAME OBJECT  │
    └───────────────────────┘
            │
    ┌───────────────────────┐  S17
    │  COMBINE IMAGE PORTIONS │
    │   AND FRAME OBJECT     │
    └───────────────────────┘
            │
    ┌───────────────────────┐  S18
    │ DISPLAY COMBINED VIDEO IMAGE │
    └───────────────────────┘
            │
        ( END )
```

FIG. 11

```
        ┌──────────────────────────────────────┐
        │        GENERATE  FRAME  OBJECT        │
        └──────────────────────────────────────┘
                          │
        ┌──────────────────────────────────────┐  S31
        │  READ  ORIGINAL  THREE-DIMENSIONAL    │
        │            FRAME  OBJECT              │
        └──────────────────────────────────────┘
                          │
        ┌──────────────────────────────────────┐  S32
        │  ROTATE  ORIGINAL  THREE-DIMENSIONAL  │
        │            FRAME  OBJECT              │
        └──────────────────────────────────────┘
                          │
        ┌──────────────────────────────────────┐  S33
        │  DETERMINE  SHAPE  FOR  FRAME  OBJECT │
        │   BY  PROJECTIVE  TRANSFORMATION  OF  │
        │   THE  THREE-DIMENSIONAL  FRAME       │
        │               OBJECT                 │
        └──────────────────────────────────────┘
                          │
        ┌──────────────────────────────────────┐  S34
        │     DETERMINE  LUMINANCE  AND         │
        │       COLOR  FOR  FRAME  OBJECT       │
        └──────────────────────────────────────┘
                          │
              ┌──────────────────────┐
              │        RETURN        │
              └──────────────────────┘
```

FIG. 12

101

```
┌──────────────────────────────────────────────────────────────────────┐
│                                                                        │
│                      112                                               │
│                  ┌──────────────┐                                      │
│                  │    DEPTH     │                                      │
│                  │ INFORMATION  │                                      │
│                  │ OBTAINING    │                                      │
│                  │    UNIT      │                                      │
│                  └──────────────┘                                      │
│                      111                         13                    │
│                  ┌──────────────┐        ┌──────────────┐              │
│          ──────► │IMAGE OBTAINING│ ─────► │    IMAGE     │ ──────┐      │
│                  │    UNIT       │        │ DIVIDING UNIT│       │      │
│                  └──────────────┘        └──────────────┘       │      │
│            14                                15                  │      │
│      ┌──────────────┐         ┌───────────────────────────┐     │      │
│      │   POP-OUT    │         │      FRAME OBJECT          │     │      │
│ ────►│ INFORMATION  │ ──────► │    GENERATING UNIT         │     │      │
│      │ OBTAINING    │         │                            │     │      │
│      │    UNIT      │         │  ┌──────────────────┐ 15a  │     │      │
│      └──────────────┘         │  │   STORAGE UNIT   │      │     │      │
│                               │  └──────────────────┘      │     │      │
│                               │  ┌──────────────────┐ 15b  │     │      │
│                               │  │    ROTATION      │      │     │      │
│                               │  │ PROCESSING UNIT  │      │     │      │
│                               │  └──────────────────┘      │     │      │
│                               │  ┌──────────────────┐ 15c  │     │      │
│                               │  │   PROJECTIVE     │      │     │      │
│                               │  │ TRANSFORMATION   │      │     │      │
│                               │  │     UNIT         │      │     │      │
│                               │  └──────────────────┘      │     │      │
│                               │  ┌──────────────────┐ 15d  │     │      │
│                               │  │     COLOR        │      │     │      │
│                               │  │ DETERMINING UNIT │      │     │      │
│                               │  └──────────────────┘      │     │      │
│                               └───────────────────────────┘     │      │
│                                                              16  ▼      │
│                                                       ┌──────────────┐  │
│                                                       │    IMAGE     │  │
│                                                       │  COMBINING   │  │
│                                                       │    UNIT      │  │
│                                                       └──────────────┘  │
└──────────────────────────────────────────────────────────────────────┘
                                                             │
                                                          2  ▼
                                                       ┌──────────────┐
                                                       │   DISPLAY    │
                                                       │    UNIT      │
                                                       └──────────────┘
```

FIG. 13

201

```
┌─────────────────────────────────────────────────────────────────────┐
│                                                                       │
│                          11                                           │
│                ┌──────────────────┐                                   │
│                │      DEPTH        │                                   │
│           ─────▶│   INFORMATION    │──────────┐                       │
│                │ OBTAINING UNIT    │          │                       │
│                └──────────────────┘          │                        │
│                      211                      ▼         13            │
│                ┌──────────────────┐    ┌──────────────┐              │
│                │  IMAGE OBTAINING │    │    IMAGE     │              │
│           ─────▶│      UNIT        │───▶│ DIVIDING UNIT│──────┐       │
│                └──────────────────┘    └──────────────┘      │       │
│                      │    214                 │              │        │
│                      ▼                        │    15        │        │
│                ┌──────────────────┐    ┌──────▼──────────────────┐   │
│                │     POP-OUT       │    │    FRAME OBJECT          │   │
│                │  INFORMATION      │───▶│  GENERATING UNIT         │   │
│                │ OBTAINING UNIT    │    │                          │   │
│                └──────────────────┘    │ ┌──────────────────┐      │   │
│                                        │ │  STORAGE UNIT    │─15a  │   │
│                                        │ └──────────────────┘      │   │
│                                        │ ┌──────────────────┐      │   │
│                                        │ │    ROTATION      │─15b  │   │
│                                        │ │ PROCESSING UNIT  │      │   │
│                                        │ └──────────────────┘      │   │
│                                        │ ┌──────────────────┐      │   │
│                                        │ │   PROJECTIVE     │─15c  │   │
│                                        │ │ TRANSFORMATION   │      │   │
│                                        │ │      UNIT        │      │   │
│                                        │ └──────────────────┘      │   │
│                                        │ ┌──────────────────┐      │   │
│                                        │ │     COLOR        │─15d  │   │
│                                        │ │ DETERMINING UNIT │      │   │
│                                        │ └──────────────────┘      │   │
│                                        └──────────────────────────┘   │
│                                                           16          │
│                                               ┌──────────────┐        │
│                                               │    IMAGE     │        │
│                                               │  COMBINING   │        │
│                                               │    UNIT      │        │
│                                               └──────────────┘        │
└───────────────────────────────────────────────────┼──────────────────┘
                                                     ▼        2
                                               ┌──────────────┐
                                               │   DISPLAY    │
                                               │    UNIT      │
                                               └──────────────┘
```

F I G. 1 4

# FIG. 15

SHAPE SEEN FROM UPPER
POSITION IN THE Y-AXIS

FIG. 16

CPU — 31

3

ROM — 32

RAM — 33

4

EXTERNAL STORAGE DEVICE — 34

INTERNAL STORAGE DEVICE — 35

INPUT UNIT — 36

OUTPUT UNIT — 37

4a

OBTAIN VIDEO IMAGE

OBTAIN DEPTH INFORMATION

DIVIDE VIDEO IMAGE

OBTAIN POP-OUT INFORMATION

GENERATE FRAME OBJECT
(ROTATION, PROJECTIVE
TRANSFORMATION,
COLOR DETERMINATION)

COMBINE

OUTPUT COMBINED VIDEO IMAGE

EP 2 416 582 A1

## INTERNATIONAL SEARCH REPORT

| | International application No. |
|---|---|
| | PCT/JP2010/055544 |

A.   CLASSIFICATION OF SUBJECT MATTER
*H04N13/04(2006.01)i*

According to International Patent Classification (IPC) or to both national classification and IPC

B.   FIELDS SEARCHED

Minimum documentation searched (classification system followed by classification symbols)
H04N13/00-15/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2005-295163 A   (Omuron Entertainment Kabushiki Kaisha),<br>20 October 2005 (20.10.2005),<br>paragraphs [0050] to [0055], [0106], [0139] to [0260]; fig. 5 to 21<br>(Family: none) | 1-8 |
| A | JP 2003-101690 A   (Yamaguchi Technology Licensing Organization, Ltd.),<br>04 April 2003 (04.04.2003),<br>paragraphs [0003] to [0007], [0011], [0017] to [0080]; fig. 1 to 4<br>(Family: none) | 1-8 |

☒   Further documents are listed in the continuation of Box C.       ☐   See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 17 May, 2010 (17.05.10) | 25 May, 2010 (25.05.10) |

| Name and mailing address of the ISA/<br>   Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2010/055544 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 6-274650 A  (Dainippon Printing Co., Ltd.), 30 September 1994 (30.09.1994), paragraphs [0001] to [0003], [0009] to [0070]; fig. 1 to 22 (Family: none) | 1-8 |
| A | JP 11-266466 A  (Matsushita Electric Industrial Co., Ltd.), 28 September 1999 (28.09.1999), abstract; paragraphs [0020] to [0049]; fig. 1 to 3 (Family: none) | 1-8 |
| A | JP 2003-032706 A  (Tadashiro SHINDO), 31 January 2003 (31.01.2003), paragraphs [0002] to [0014]; fig. 1 to 12 (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S607291 B
- JP H1171390 B
- JP H9161074 B